# FASCICULE DE BREVET EUROPEEN

(11) **EP 2 376 306 B1**
(45) Date de publication et mention de la délivrance du brevet: **09.01.2019**
(21) Numéro de dépôt: 09805756.5
(22) Date de dépôt: 18.12.2009
(51) Int. Cl.: B60L 5/20, B60L 5/39

(54) **SUPPORT D'UNE BANDE DE CAPTAGE DE COURANT ÉLECTRIQUE**
TRÄGER FÜR EINE STROMABNAHMELEISTE
MEDIUM FOR AN ELECTRIC CURRENT COLLECTION STRIP

(30) Priorité: 19.12.2008 FR 0858846
(43) Date de publication de la demande: 19.10.2011
(73) Titulaire: Mersen France Amiens SAS, 80080 Amiens (FR)
(72) Inventeur: LAURENT, Thierry, F-80000 Amiens (FR); FARDEL, Guillaume, F-80000 Amiens (FR)
(74) Mandataire: Radault, Gabrielle
(86) Numéro de dépôt international: PCT/FR2009/052624
(87) Numéro de publication internationale: WO 2010/070246

(56) Documents cités:
- WO-A-89/12560
- AT-B- 209 376
- DE-C- 466 423
- JP-A- 62 293 904
- US-A- 5 351 794
- US-A- 6 009 987

## Description

L'invention concerne un support d'une bande de captage de courant électrique et plus particulièrement une bande de captage d'un matériel roulant.

L'invention est indifféremment adaptée à une bande de captage de courant d'un pantographe, frottant sur un caténaire, ou d'un patin, frottant sur un rail.

Actuellement, pour alimenter un matériel roulant par une source de courant extérieure, une des techniques est l'utilisation d'un troisième rail, généralement utilisé dans les transports ferroviaires tel que le métropolitain, les trains de banlieue, etc.

Ce troisième rail permet de transmettre le courant électrique au matériel roulant par l'intermédiaire de patins glissants qui assurent la captation du courant et son transfert au matériel roulant.

Ces patins sont composés notamment d'un support, appelé aussi étrier, sur lequel on vient sertir une bande de captage, généralement une bande en carbone.

Pour assurer le maintien de la bande de captage sur l'étrier, le carbone est usiné pour assurer un assemblage en queue d'aronde avec les bords de l'étrier.

Le support comprend un dispositif de solidarisation au matériel roulant, généralement un ensemble de vis.

Le patin ainsi assemblé est ensuite trempé dans un bain d'étain en fusion pour braser le carbone à l'étrier afin d'assurer une bonne conductivité entre la bande de captage et le support.

C'est le patin ainsi assemblé qui est monté sur le matériel roulant.

La bande de captage en carbone, en frottement sur le troisième rail pour assurer la captation de courant, présente une usure continue et nécessite un changement régulier. La bande de captage étant solidarisée de façon inamovible sur l'étrier, il est nécessaire de changer l'ensemble du patin, étrier et bande de captage, notamment en démontant l'ensemble des vis qui le relie au matériel roulant voir US 5 351 794.

La bande de captage étant indissociable du support, il est nécessaire de se débarrasser de l'ensemble, ce qui représente un coût relativement élevé.

L'opération de montage/démontage du patin sur le matériel roulant est relativement longue puisqu'il faut solidariser/désolidariser par vissage le patin du matériel roulant.

Les dispositifs connus peuvent donc être relativement onéreux, conduire à une « perte » de matériau, notamment dans le cas où le support est changé avec chaque nouvelle bande, nécessiter un long temps de changement ou de maintenance, de nombreuses étapes de démontage, et/ou ne pas être suffisamment résistant, notamment à la corrosion.

L'invention vise à remédier à tout ou partie des problèmes évoqués ci-dessus, et en particulier à fournir un support d'une bande de captage qui permette un assemblage plus facile de la bande de captage sur le matériel roulant tout en pouvant être réutilisé.

Selon un premier aspect, l'invention a pour objet un support d'une bande de captage de courant électrique d'un matériel selon la revendication 1. Ledit support étant apte à maintenir ladite bande et à transmettre le courant électrique la traversant au matériel roulant, ledit support comprenant un fond et au moins deux parois formant un volume apte à recevoir en partie la bande, ledit support comprenant au moins un moyen élastique apte à plaquer ladite bande sur ledit fond.

Plus particulièrement, la bande est plaquée sur le fond uniquement grâce au(x) moyen(s) élastique(s), c'est-à-dire notamment qu'aucun autre moyen ne vient coopérer pour permettre le plaquage.

Par « matériel roulant électrique », on entend au sens de la présente invention tout matériel roulant nécessitant un contact avec un patin de troisième rail, formé par le support et la bande de captage.

Le plaquage de la bande sur le support permet de maintenir l'ensemble et ainsi d'assurer non seulement une bonne stabilité mécanique mais également une bonne conductivité électrique.

Notamment, le plaquage est effectué par une force allant de 600 à 5000 N, notamment de 1000 à 1600 N.

Avantageusement, les parois et/ou le au moins un moyen élastique sont composés ou revêtus d'un matériau électriquement isolant.

Le revêtement peut présenter une épaisseur allant de 0,1 à 2 mm, notamment de 0,1 à 1 mm et en particulier de 0,1 à 0,5 mm.

En particulier, le matériau électriquement isolant est un plastique, un caoutchouc, une résine et/ou une peinture.

En particulier, le fond comprend au moins un téton apte à coopérer avec au moins un orifice correspondant de la bande de captage.

Le fond peut comprendre au moins une butée latérale.

Selon un mode de réalisation particulier, le fond comprend deux butées latérales.

Avantageusement, au moins une paroi comprend au moins une partie, par exemple une encoche, apte à recevoir une partie adaptée, ou complémentaire, de la bande de captage.

Avantageusement, chaque encoche est apte à recevoir au moins un moyen élastique.

En particulier, le moyen élastique est une lame ressort.

Avantageusement, la lame ressort est en un matériau plastique.

Le support étant soumis au passage d'un courant électrique, ce dernier peut provoquer, au moins dans certaines parties, des échauffements dans les matériaux conducteurs et conduire ainsi à une diminution de leurs caractéristiques mécaniques.

L'utilisation d'un matériau électriquement isolant en tant que moyen élastique ou revêtant le moyen élastique peut permettre audit moyen élastique de ne pas être, ou d'être moins, soumis à l'échauffement dû au passage du courant et donc de conserver plus longtemps les caractéristiques mécaniques souhaitées, notamment de flexibilité.

Selon un mode de réalisation particulier, chaque encoche est apte à recevoir au moins un moyen de verrouillage de la bande de captage.

Avantageusement, le moyen de verrouillage est une tige apte à pénétrer dans un orifice correspondant de la bande de captage.

En particulier, le moyen élastique est situé au moins en partie à la jonction entre le fond et les parois.

Selon un premier mode de réalisation, le fond et les parois sont formés d'une seule pièce, le moyen élastique étant une propriété mécanique de la jonction entre le fond et les parois.

Selon un deuxième mode de réalisation, le fond et les parois sont des pièces distinctes, la liaison entre elles étant une pièce intermédiaire formant liaison élastique.

Selon un mode de réalisation particulier, les extrémités libres des parois comprennent chacun un rebord notamment apte à permettre d'écarter les extrémités libres des parois.

La bande de captage est tout particulièrement à base de carbone.

L'invention concerne également un dispositif de captation électrique comprenant un support selon l'invention et une bande de captage maintenue par ce dernier. Ce dispositif peut être un patin ou un pantographe.

Avantageusement, le dispositif de captation électrique comprend un moyen adhésif entre la bande de captage et le support.

Notamment, ce moyen adhésif est apte à sécuriser la bande en cas de dislocation.

La dislocation peut avoir lieu après un choc et plus particulièrement après l'usure de la bande due à son frottement, qui réduit son épaisseur et donc sa résistance mécanique. La dislocation de la bande peut entrainer la perte de morceaux qui risquent d'entraver le bon fonctionnement du matériel électrique.

En particulier, le moyen adhésif est positionné au contact entre le fond et la bande.

Avantageusement, le moyen adhésif comporte une seule face adhésive positionnée au contact de la bande uniquement.

En particulier, le moyen adhésif est apte à supporter une température comprise de 100 à 500°C, de préférence d'au moins 150°C.

L'adhésion de la bande au support sera de préférence réalisée à température ambiante et sera avantageusement suffisamment faible pour permettre un démontage et un nettoyage faciles lors d'une opération de rechange de la bande de captage.

Selon un premier mode de réalisation, le moyen adhésif sera par exemple une bande adhésive collée sur la bande de captage. En particulier, la bande adhésive peut être choisie parmi un ou plusieurs des composés suivants : élastomère, cyanoacrylates, acétate de polyvinyle, urée-formol. Plus particulièrement, la bande adhésive peut être renforcée par des fibres de tissu ou de métal. Avantageusement, un tel renfort à base de métal permet d'améliorer la conductivité électrique entre la bande de carbone et le support. La bande adhésive permet notamment d'augmenter la capacité d'amortissement entre le fond du support et la bande de captage de courant.

Selon un autre mode de réalisation, le moyen adhésif est une colle liquide, mono ou bi composant. Avantageusement, la colle est injectée après le montage de la bande sur son support. En particulier, la colle est choisie parmi les éléments suivants : époxy bicomposant à base de bisphénol A, silicone, polyuréthane bi-composant ou acrylique. En particulier, il est possible d'ajouter à la colle un additif pour favoriser la conductivité électrique tel que de la poudre de graphite ou d'argent.

L'homme du métier sera à même de déterminer quel moyen adhésif est adapté à son utilisation. En particulier, une bande adhésive sera avantageusement utilisée en en vue d'une réutilisation immédiate du support avec une force d'adhésion uniforme et une bonne capacité d'amortissement. Une colle nécessitera un temps de montage de la bande plus long mais permet d'obtenir un moyen adhésif présentant une meilleure conductivité (ajout d'additif).

Avantageusement, une bande adhésive, collée uniquement sur la bande de captage, ne laissera pas d'adhésif sur le support et ne nécessitera donc pas de phase de nettoyage, favorisant ainsi une réutilisation immédiate du support.

Plus particulièrement, le moyen adhésif devra avoir une durée d'utilisation, une fois assemblé avec la bande de captage, d'au moins 6 à 7 mois, ou d'au moins 80000 km, en fonctionnement.

L'invention concerne également un procédé pour solidariser une bande de captage à un support, le procédé comprenant les étapes suivantes :
- Au moyen des rebords, écarter les extrémités des parois du support suffisamment pour pouvoir y introduire la bande de captage ;
- Positionner la bande de captage dans le volume défini entre le fond et les parois du support;
- Relâcher les extrémités des parois du support afin de plaquer la bande sur le dit fond.

En particulier, le procédé peut comprendre, avant de positionner la bande de captage dans le volume, le positionnement d'une bande adhésive sur la partie de bande en contact avec le fond.

Selon un autre mode de réalisation du procédé de solidarisation, il est possible d'ajouter, après avoir relâché les extrémités des parois du support, une étape d'injection d'une colle, dans les interstices naturelles et ou artificielles créées entre la bande et le support.

En fonction de la nature du moyen adhésif, on pourra prévoir l'application d'une pression et le passage en étuve de l'ensemble.

Par interstice artificielle, on comprendra que l'on aura pu prévoir des orifices dans le support pour l'injection de la colle.

Afin de favoriser la propagation de la colle, il est possible de prévoir des rainures sur la face de la bande en contact avec le fond du support.

L'invention concerne aussi un procédé pour extraire une bande de captage d'un support, le procédé comprenant les étapes suivantes :
- Au moyen des rebords, écarter les extrémités des parois du support suffisamment pour pouvoir en extraire la bande de captage ;
- Extraire la bande de captage hors du volume défini entre le fond et les parois du support;
- Relâcher les extrémités des parois du support.

Dans le cas de l'utilisation d'un moyen adhésif, on pourra prévoir de briser la bande de captage avant son extraction, le support pouvant ensuite être réutilisé après élimination des moyens adhésifs et nettoyage.

Dans une application particulière, le support est utilisé en tant que patin de captation électrique d'un matériel roulant ferré ou sur pneumatique.

L'invention est maintenant décrite en faisant référence aux dessins, non limitatifs, dans lesquels :
- La figure 1 est une vue d'un premier mode de réalisation de l'invention ;
- Les figures 2 et 3 représentent un second mode de réalisation de l'invention ;
- La figure 4 est une vue détaillée d'une extrémité du support des figures 2 et 3.

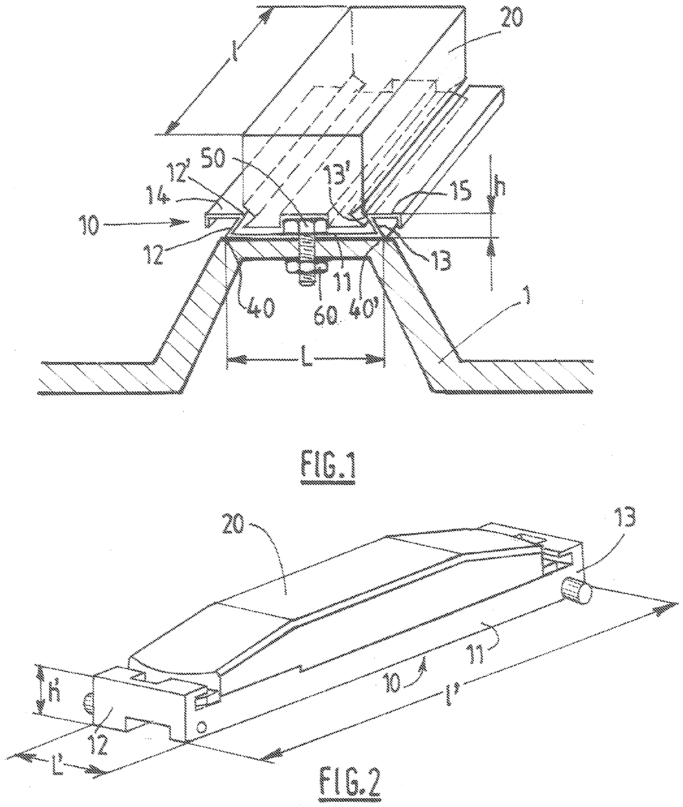

La figure 1 représente un premier mode de réalisation d'un support 10.

Selon un premier mode de réalisation représenté sur la figure 1, il s'agit d'un support 10 d'une bande 20 de captage de courant électrique.

Le support 10 comprend un fond et deux parois 12, 13 formant un volume apte à recevoir en partie la bande 20.

La bande 20 de captage est usinée jusqu'à présenter un décrochement, formant avantageusement un profil en queue d'aronde.

Les parois 12, 13 du support 10 forment un angle aigu avec le fond 11 de sorte que les parois 12, 13 sont apte à coopérer avec le profil en queue d'aronde de la bande 20. Selon un mode de réalisation particulier, les parois 12, 13 du support 10 forment un arrondi avec le fond 11.

Dans cet exemple, le fond 11 et les parois 12, 13 sont formés d'une seule pièce, la jonction entre le fond 11 et les parois 12, 13 étant élastique, rapprochant les extrémités libres 12', 13' l'une vers l'autre.

L'élasticité de la jonction est une caractéristique mécanique fonction du matériau utilisé et des dimensions du support 10.

Dans l'exemple, le support 10 est en inox ou en acier.

Ses dimensions peuvent être sensiblement les suivantes :
Une largeur allant de 35 à 70 mm, 65 mm dans l'exemple ;
Une longueur allant de 200 à 300 mm, 272 mm dans l'exemple ;
Une hauteur allant de 30 à 60 mm, 31 mm dans l'exemple ;
Une épaisseur allant de 0,5 à 1,5 mm, 0,8mm dans l'exemple.

Il est bien évident que l'homme du métier adaptera les dimensions du support 10 afin de toujours conserver une élasticité suffisante des jonctions 40, 40' pour permettre le plaquage de la bande 20 sur le fond 11 par l'intermédiaire des parois 12, 13 appuyant sur le profil en queue d'aronde de ladite bande 20.

Dans l'exemple, la force globale exercée par les moyens élastiques est sensiblement de l'ordre de 1200 N.

Selon une variante de réalisation, le fond 11 et les parois 12, 13 sont des éléments différents, liés entre eux par un élément formant jonction 40, 40' élastique.

Les parois 12, 13 sont terminées chacune par un rebord 14, 15 apte à supporter une force capable d'écarter les extrémités libres 12', 13'.

Notamment, chaque rebord 14, 15 est apte à coopérer avec un outil exerçant une force suffisante pour écarter lesdites extrémités.

L'écartement des extrémités 12', 13' doit être suffisant pour pouvoir introduire/ressortir la bande 20 de captage.

Afin de solidariser le support 10 sur un élément roulant 1, le support 10 est percé de part en part afin de recevoir un dispositif de fixation, notamment un dispositif vis 50 écrou 60.

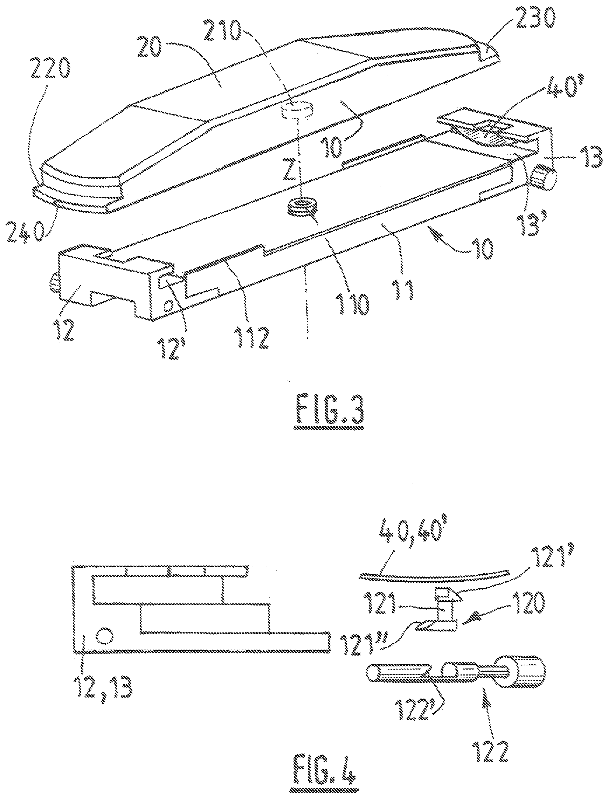

Selon un deuxième mode de réalisation représenté sur les figures 2 et 3, il s'agit d'un support 10 d'une bande 20 de captage de courant électrique.

Le fond 11 comprend un téton 110 apte à coopérer avec un orifice 210 correspondant de la bande 20 de captage.

Le fond 11 comprend également deux butées latérales 112, 112' apte à bloquer la bande 20 de captage.

Les parois 12, 13 comprennent chacune une encoche 12', 13' apte à recevoir une partie 220, 230 de la bande 20 de captage.

Pour positionner la bande 20 de captage sur le support 10, on place la bande 20 sensiblement à 90° par rapport au support 10 tout en positionnant l'orifice 210 de la bande 20 sur le téton 110 du fond 10.

On réalise ensuite un quart de tour de la bande 20 jusqu'à ce que cette dernière vienne en butée sur les butées latérales 112, 112'.

Les parties 220, 230 de la bande 20 sont alors insérées dans les encoches 12', 13' des parois 12, 13.

Comme on peut le voir sur la paroi 13 de la figure 3, dont la figure 4 est une vue éclatée, il y a un moyen élastique composé d'une lame ressort 40, 40' apte à plaquer la bande 20 de captage sur le fond 11.

Afin de maintenir la bande 20 de captage en position dans les encoches 12', 13', au moins un support 12, 13 comprend un moyen de verrouillage 120.

Le moyen de verrouillage 120 comprend au moins une tige 121 apte à coopérer avec un orifice correspondant 240 de la bande 20 de captage.

Dans l'exemple, la tige 121 est forcée vers la bande 20 de captage par l'intermédiaire d'un ressort (non représenté). Une partie inclinée 121' de la tige 121 permet à la bande 20 de captage de glisser sur la tige 121 en forçant le ressort jusqu'à ce que la tige 121 entre dans l'orifice 240 correspondant de la bande 20 de captage.

Afin de positionner la tige 121 en position de relâchement de la bande 20 de captage, on actionne la tige de relâchement 122 qui, par l'intermédiaire de sa partie inclinée 122' en contact avec la partie inclinée secondaire 121", vient forcer sur le ressort (non représenté) de la tige 121, libérant ainsi la bande 20 de captage. Il suffit alors d'effectuer un quart de tour à la bande 20 de captage pour ressortir cette dernière des encoches 12', 13' et donc de son support 10.

Le support 10 est solidarisé sur le matériel roulant 1 par tout moyen connu tel que par exemple par vissage.

L'homme du métier comprendra aisément l'avantage procuré par ces modes de réalisation d'un support d'une bande de captage, permettant notamment de gagner du temps lors du changement des patins de troisième rail mais également un gain financier, et écologique, grâce notamment au fait de pouvoir ne changer que la partie qui s'use, à savoir la bande de captage. L'homme du métier adaptera aisément un tel support d'une bande de captage de courant à d'autres utilisations et notamment aux pantographes.

## Revendications

1. Support (10) d'une bande (20) de captage de courant électrique d'un matériel roulant (1), ledit support (10) étant apte à maintenir ladite bande (20) et à transmettre le courant électrique la traversant au matériel roulant (1), ledit support (10) comprenant un fond (11) et au moins deux parois (12, 13) formant un volume apte à recevoir en partie la bande (20), **caractérisé en ce que** le support (10) comprend au moins un moyen élastique (40, 40') situé au moins en partie à la jonction entre le fond (11) et les parois (12, 13) et apte à plaquer ladite bande (20) sur ledit fond (11).

2. Support (10) selon la revendication 1, **caractérisé en ce que** les parois (12, 13) et/ou le au moins un moyen élastique (40, 40') sont composés et/ou revêtus d'un matériau électriquement isolant.

3. Support (10) selon l'une quelconque des revendications 1 à 2, **caractérisé en ce que** le fond (11) comprend au moins un téton apte à coopérer avec au moins un orifice correspondant de la bande (20) de captage.

4. Support (10) selon l'une quelconque des revendications 1 à 3, **caractérisé en ce que** le fond (11) comprend au moins une butée latérale.

5. Support selon l'une quelconque des revendications 1 à 4, **caractérisé en ce que** les extrémités libres des parois (12, 13) comprennent chacune un rebord (14, 15) notamment apte à permettre d'écarter les extrémités libres des parois (12, 13).

6. Dispositif de captation électrique comprenant un support (10) selon l'une des revendications 1 à 5 et une bande de captage maintenue dans ledit support.

7. Dispositif de captation électrique selon la revendication 6 **caractérisé en ce que** la bande (20) de captage est à base de carbone.

8. Dispositif de captation électrique selon l'une des revendications 6 ou 7, **caractérisé en ce qu'**il comprend un moyen adhésif entre la bande de captage et le support.

9. Utilisation du support (10) selon l'une quelconque des revendications 1 à 5 en tant que patin de captation électrique d'un matériel roulant ferré ou sur pneumatique.

10. Procédé pour solidariser une bande (20) de captage à un support (10) selon la revendication 5 comprenant les étapes suivantes :
- Au moyen des rebords (14, 15), écarter les extrémités des parois (12, 13) du support (10) suffisamment pour pouvoir y introduire la bande (20) de captage ;
- Positionner la bande (20) de captage dans le volume défini entre le fond (11) et les parois (12, 13) du support (10) ;
- Relâcher les extrémités des parois (12, 13) du support (10) afin de plaquer la bande (20) sur le dit fond (11).

11. Procédé pour solidariser une bande (20) de captage à un support (10) selon la revendication 10, comprenant,
- avant de positionner la bande (20) de captage dans le volume, le positionnement d'une bande adhésive sur la partie de bande en contact avec le fond (11), ou
- après le relâchement des extrémités des parois, une étape d'injection d'une colle, dans les interstices naturels et ou artificiels créés entre la bande et le support.

12. Procédé pour extraire une bande (20) de captage d'un support (10) selon la revendication 5 comprenant les étapes suivantes :
- Au moyen des rebords (14, 15), écarter les extrémités des parois (12, 13) du support (10) suffisamment pour pouvoir en extraire la bande (20) de captage ;
- Extraire la bande (20) de captage hors du volume défini entre le fond (11) et les parois (12, 13) du support (10) ;
- Relâcher les extrémités des parois (12, 13) du support (10).

## Patentansprüche

1. Träger (10) für eine elektrische Stromabnahmeleiste (20) eines Fahrzeugmaterials (1), wobei der Träger (10) geeignet ist, die Leiste (20) zu halten, und den elektrischen Strom, der diese durchquert, zu dem Fahrzeugmaterial (1) zu über-tragen, wobei der Träger (10) einen Boden (11) und mindestens zwei Wände (12, 13) umfasst, die ein Volumen bilden, das geeignet ist, die Leiste (20) teilweise aufzunehmen,
**dadurch gekennzeichnet, dass** der Träger (10) mindestens ein elastisches Mittel (40, 40') umfasst, das mindestens teilweise an der Verbindung zwischen dem Boden (11) und den Wänden (12, 13) angeordnet ist und geeignet ist, die Leiste (20) auf den Boden (11) zu drücken.

2. Träger (10) nach Anspruch 1,
**dadurch gekennzeichnet, dass** die Wände (12, 13) und/oder das mindestens eine elastische Mittel (40, 40') aus einem elektrisch isolierenden Material bestehen und/oder damit beschichtet sind.

3. Träger (10) nach einem der Ansprüche 1 bis 2,
**dadurch gekennzeichnet, dass** der Boden (11) mindestens einen Stift umfasst, der geeignet ist, mit mindestens einer entsprechenden Öffnung der Abnahmeleiste (20) zusammenzuwirken.

4. Träger (10) nach einem der Ansprüche 1 bis 3,
**dadurch gekennzeichnet, dass** der Boden (11) mindestens einen lateralen Anschlag umfasst.

5. Träger (10) nach einem der Ansprüche 1 bis 4,
**dadurch gekennzeichnet, dass** die freien Enden der Wände (12, 13) jeweils einen Rand (14, 15) umfassen, der insbesondere geeignet ist zu gestatten, die freien Enden der Wände (12, 13) zu beabstanden.

6. Elektrische Stromabnahmevorrichtung, umfassend einen Träger (10) nach einem der Ansprüche 1 bis 5 und eine Abnahmeleiste, die in dem Träger gehalten wird.

7. Elektrische Stromabnahmevorrichtung nach Anspruch 6,
**dadurch gekennzeichnet, dass** die Abnahmeleiste (20) auf Kohlenstoff basiert.

8. Elektrische Stromabnahmevorrichtung nach einem der Ansprüche 6 oder 7,
**dadurch gekennzeichnet, dass** diese ein Haftmittel zwischen der Abnahmeleiste und dem Träger umfasst.

9. Verwendung des Trägers (10) nach einem der Ansprüche 1 bis 5, als elektrische Abnahmeschiene eines Eisenbahnmaterials oder an einem Luftreifen.

10. Verfahren zum festen Verbinden einer Abnahmeleiste (20) mit einem Träger (10) nach Anspruch 5, umfassend die folgenden Schritte:
- mittels der Ränder (14, 15), ausreichendes Beabstanden der Enden der Wände (12, 13) des Trägers (10), um darin die Abnahmeleiste (20) einzuführen;
- Positionieren der Abnahmeleiste (20) in dem Volumen, das zwischen dem Boden (11) und den Wänden (12, 13) des Trägers (10) definiert wird;
- Freigeben der Enden der Wände (12, 13) des Trägers (10), um die Leiste (20) auf den Boden (11) zu drücken.

11. Verfahren zum festen Verbinden einer Abnahmeleiste (20) mit einem Träger (10) nach Anspruch 10, umfassend:
- vor dem Positionieren der Abnahmeleiste (20) in dem Volumen, Positionieren einer Haftleiste auf dem Teil der Leiste in Kontakt mit dem Boden (11), oder
- nach dem Freigeben der Enden der Wände, einen Schritt des Einbringens eines Klebers in die natürlichen und/oder künstlichen Zwischenräume, die zwischen der Leiste und dem Träger erzeugt werden.

12. Verfahren zum Extrahieren einer Abnahmeleiste (20) von einem Träger (10) nach Anspruch 5, umfassen die folgenden Schritte:
- mittels der Ränder (14, 15), ausreichendes Beabstanden der Enden der Wände (12, 13) des Trägers (10), um die Abnahmeleiste (20) daraus extrahieren zu können;
- Extrahieren der Abnahmeleiste (20) aus dem Volumen, das zwischen dem Boden (11) und den Wänden (12, 13) des Trägers (10) definiert wird;
- Freigeben der Enden der Wände (12, 13) des Trägers (10).

## Claims

1. A support (10) for a current collector strip (20) of a rolling stock vehicle (1), said support (10) being suitable for holding said strip (20) in place and for transmitting the current passing through it to the rolling stock vehicle (1), said support (10) comprising a base (11) and at least two walls (12, 13) defining a space suitable for partially accommodating the strip (20), **characterized in that** the support (10) comprises at least one elastic means (40, 40') located at least partially at the junction between the base and the walls, and suitable for clamping said strip (20) against said base (11).

2. The support (10) as claimed in claim 1, **characterized in that** the walls (12, 13) and/or the at least one elastic means (40, 40') are made of and/or coated with an electrically insulating material.

3. The support (10) as claimed in either of claims 1 and 2, **characterized in that** the base (11) comprises at least one stud (110) suitable for cooperating with at least one corresponding orifice (210) of the collector strip (20).

4. The support (10) as claimed in any one of claims 1 to 3, **characterized in that** the base (11) comprises at least one lateral stop (112).

5. The support according to any one of claims 1 to 4, **characterized in that** the free ends of the walls (12, 13) each comprise an edge (14, 15), notably arranged to allow moving apart the free ends of the walls (12, 13).

6. A current-collecting device comprising a support (10) as claimed in one of claims 1 to 5 and a collector strip held in place in said support.

7. The current-collecting device as claimed in claim 6, **characterized in that** the collector strip (20) is a carbon-based strip.

8. The current-collecting device as claimed in either of claims 6 and 7, **characterized in that** it comprises an adhesive means between the collector strip and the support.

9. The use of the support (10) as claimed in one of claims 1 to 5 as current-collecting shoe for a railway or pneumatic rolling stock vehicle.

10. A method for fastening a collector strip (20) to a support (10) as claimed in claim 5, comprising the following steps:
- moving apart the ends of the walls (12, 13) of the support (10), by means of the edges (14, 15), sufficiently to be able to insert the collector strip (20) thereinto;
- positioning the collector strip (20) in the space defined between the base (11) and the walls (12, 13) of the support (10); and
- releasing the ends of the walls (12, 13) of the support (10) so as to clamp the strip (20) against said base (11).

11. The method for fastening a collector strip (20) to a support (10) as claimed in claim 10, comprising,
before the collector strip (20) is positioned in the space, the positioning of an adhesive tape on that part of the strip which is in contact with the base (11)
after the ends of the walls have been released, a step of injecting an adhesive into the natural gaps or artificial gaps created between the strip and the support.

12. A method for extracting a collector strip (20) from a support (10) as claimed in claim 5, comprising the following steps:
- moving apart the ends of the walls (12, 13) of the support (10), by means of the edges (14, 15) sufficiently to be able to extract the collector strip (20) therefrom;
- extracting the collector strip (20) from the space defined between the base (11) and the walls (12, 13) of the support (10); and
- releasing the ends of the walls (12, 13) of the support (10).
